# EUROPEAN PATENT APPLICATION

(11) **EP 2 541 572 A1**
(43) Date of publication of application: **02.01.2013**
(21) Application number: 11171527.2
(22) Date of filing: 27.06.2011
(51) Int. Cl.: H01H 9/00, H01F 29/04, H02H 7/055

(54) **Method and apparatus for monitoring of a tap changer**

(71) Applicant: ABB Technology Ltd, 8050 Zürich (CH)
(72) Inventor: Breder, Henrik, SE-723 47 Västerås (SE); Jonsson, Lars, SE-723 47 Västerås (SE)
(74) Representative: Ahrengart, Kenneth

(57) **Abstract**

The present invention relates to a tap changer comprising a diverter switch which has at least two branches , wherein each branch comprises: a series connection of a main interrupter and a transition interrupter; and a transition resistor connected in parallel with the main interrupter. The tap changer further comprises at least one current detector arranged to detect a current flowing through at least one path of the diverter switch and to generate a current indication signal in response to a detected current; as well as a fault detector. The fault detector is arranged to receive a current indication signal from the current detector; determine, based on at least one received current indication signal, whether a fault has occurred in the diverter switch; and generate a fault indication signal if determined that a fault has occurred in the diverter switch.

## Description

### Technical field

The present invention relates to the field of power transmission, and in particular to tap changers for controlling the output voltage of a transformer.

### Background

Tap changers are used for controlling the output voltage of a transformer by providing the possibility of switching in, or switching out, additional turns in a transformer winding. A tap changer comprises a set of fixed contacts, each of which is connectable to a different tap of a regulating winding of a transformer, where the taps are located at different positions in the regulating winding. A tap changer further comprises a moveable contact which is connected to a current collector at one end, and connectable to one of the fixed contacts at the other end. By moving the moveable contact between the different fixed contacts, different taps are switched in or out, the effective number of turns of the transformer is thereby increased or decreased, and the output voltage of the transformer is thus regulated.

In order to facilitate for switching in and switching out of different taps while the tap changer is connected to a load, many tap changers include a diverter switch as well as a tap selector. Such a tap changer often has two current collectors, where a first group of fixed contacts are connectable, via a first moveable contact, to a first current collector, while a second group of fixed contacts are connectable, via a second moveable contact, to the second current collector. In such a tap changer, the diverter switch typically has two branches, where a first branch is connected to the first current collector via at least one first interrupter, while the second branch is connected to the second current collector, via at least one second interrupter.

Tap changers are in general reliable, and fault situations are rare. However, a fault r in a high voltage on-load tap changer could lead to severe situations. It is therefore desirable to further reduce the risk of damage to an on-load diverter switch tap changer and its surroundings during operation.

### Summary

A problem to which the present invention relates is how to reduce the risk of damage to an on-load diverter switch tap changer during operation.

This problem is addressed by a tap changer for connection to a regulating winding of a transformer connected to a power line. The tap changer comprises a diverter switch having at least two branches, wherein each branch comprises a series connection of a main interrupter and a transition interrupter; as well as a transition resistor connected in parallel with the main interrupter. The tap changer further comprises: at least one current detector arranged to detect a current flowing through at least one path of the diverter switch and to generate a current indication signal in response to a detected current; and a fault detector. The fault detector is arranged to receive a current indication signal from the current detector; determine, based on at least one received current indication signal, whether a fault has occurred in the diverter switch; and generate a fault indication signal if determined that a fault has occurred in the diverter switch.

The problem is also addressed by a method of operating a tap changer comprising a diverter switch having at least two branches, wherein each branch comprises: a series connection of a main interrupter and a transition interrupter; and a transition resistor connected in parallel with the main interrupter. The method comprises: monitoring at least one path of the diverter switch to detect a current flowing through the path; generating a current indication signal in response to a current flowing through the path; determining, based on at least one generated current indication signal, whether a fault has occurred in the diverter switch; and generating a fault indication signal if determined that a fault has occurred in the diverter switch.

The tap changer according to the invention exhibits a reduced risk of experiencing damage to itself and its surroundings in the unlikely event of interrupter failure. In the diverter switch configuration used in the tap changer of the invention, no short circuit will be created over the transformer regulation step in case a high voltage transient leads to an internal flash-over in an interrupter. Moreover, the transition resistor significantly reduces the risk of flash-over in the main interrupter of a branch. In relation to the case where a closed interrupter fails to open during a switching operation of the tap changer, the fault detector will, based on at least one current indication signal received from the current detector, detect such fault, and the disconnection of the tap changer from the power line can be initiated if necessary. In one embodiment, the fault detector is arranged to determine, based on at least one current indication signal, whether a transition interrupter has failed to open. A failing transition interrupter typically requires the disconnection of the tap changer in order to avoid damage.

In one embodiment, the at least one current detector comprises at least one current detector arranged to detect a current flowing through a transition resistor and to generate a current indication signal in response to a detected current. The at least one current detector can be a current detector arranged to detect a current flowing through a common line via which the transition resistors of the different branches are connected. Alternatively, each branch is provided with a separate current detector arranged to detect any current flowing through the transition resistor of the branch. By detecting a current flowing through a transition resistor, information can be obtained by which both a failing transition interrupter and a failing main interrupter can be detected.

In this embodiment, the fault detector can advantageously be arranged determine whether the duration of a received current indication signal exceeds a first threshold in order to determine whether a transition interrupter has failed to open by. Hereby is achieved that a failing transition interrupter can efficiently be detected. Alternatively, or additionally, the fault detector can be arranged to determine whether a main interrupter has failed to open by determining whether the duration of a current indication signal is shorter than a second threshold.

In one aspect of this embodiment, a current detector is a current measurement device capable of indicating, by means of the current indication signal, a magnitude of a detected current, and the fault detector is arranged to consider the magnitude of the detected current in the determining of whether a fault has occurred. Hereby, further information about the characteristics of the fault can be obtained. In particular, further information about the operation of the main interrupters can be obtained. For example, the fault detector could be arranged to check whether the magnitude of the sum of the currents through the transition resistors exhibits a jump which exceeds an expected magnitude variation, in order to determine whether the operation of a main interrupter is faulty. Alternatively, or additionally, the fault detector can be arranged to determine whether the operation of a main interrupter is faulty by checking whether the magnitude of a current through the transition resistor of a first branch, from which the current is being switched over to a second branch, is smaller than an expected magnitude.

In an embodiment wherein a current detector is arranged in a common line as discussed above, the fault detector can be further arranged to receive a switching indication signal indicative of the occurrence of a switching operation; and to determine whether a current indication signal has been received in conjunction with the switching indication signal, and, if not, generate a signal indicating that the current detector is faulty. This can be useful, since during normal operation, the current detector will only detect a current in case of a switching operation of the tap changer, and a fault current detector could be confused with the non-occurrence of a switching operation. In a three phase tap changer comprising one diverter switch per phase, the fault detector could, alternatively, or additionally, be arranged to, upon receipt of a current indication signal from a first phase, check whether a current indication signal has also been received from both of the other phases, and if not, generate a signal indicating that a current detector is faulty.

In another embodiment, the diverter switch comprises a current detector per branch, where such current detector is arranged to detect a current flowing through the transition interrupter of said branch. The fault detector in this embodiment is arranged to check whether a time period, during which a current indication signal is received from the current detector of two branches, exceeds a third threshold, in order to determine whether a transition interrupter has failed to open.

In a three phase where each phase comprises a diverter switch, the fault detector could be arranged to determine, from an analysis of the duration of corresponding current indication signals from the three phases, a value of the first and/or second and/or third threshold. By comparing the duration of the different phases, an accurate estimation of the expected duration can be achieved.

Further aspects of the invention are set out in the following detailed description and in the accompanying claims.

### Brief description of the drawings

- Fig. 1a: is a schematic illustration of a tap changer having a tap selector and a diverter switch.
- Fig. 1b: shows an example of a diverter switch which can be used in the tap changer according to the invention.
- Fig. 2a: schematically illustrates the normal switching sequence of a diverter switch having a main interrupter and a transition interrupter in series, where the main interrupter is connected in parallel with a transition resistor.
- Fig. 2b: schematically illustrates a switching sequence in the same type of diverter switch as in Fig. 2a, but where a main interrupter fails to break the current.
- Fig. 2c: schematically illustrates a switching sequence in the same type of diverter switch as in Figs. 2a and 2b, but where a transition interrupter fails to break the current.
- Fig. 3a: schematically illustrates an embodiment of a diverter switch wherein a current detector is arranged to detect a current flowing through a common line via which the transition resistors of each branch is connected to an external contact.
- Fig. 3b: schematically illustrates an embodiment of a diverter switch wherein a current detector is arranged in each branch to detect a current flowing through the transition resistor of the branch.
- Fig. 3c: schematically illustrates another embodiment of a diverter switch wherein a current detector is arranged in each branch to detect a current flowing through the transition resistor of the branch.
- Fig. 3d: schematically illustrates another embodiment of a diverter switch wherein a current detector is arranged in each branch to detect a current flowing through the transition interrupter of the branch.
- Fig. 4: schematically illustrates an embodiment of a fault detector arranged to receive and analyze current indication signals from a three phase tap changer in order to detect a faulty operation of the diverter switches of the tap changer phases.
- Fig. 5: is a flowchart illustrating an embodiment of a method performed by a fault detector.
- Fig. 6a-e: are flowcharts illustrating different embodiments of the analysis of current indication signals performed in a fault detector.
- Fig. 7: shows an embodiment of a current detector.
- Fig. 8: is a schematic illustration of a computer implemented fault detector.

### Detailed description

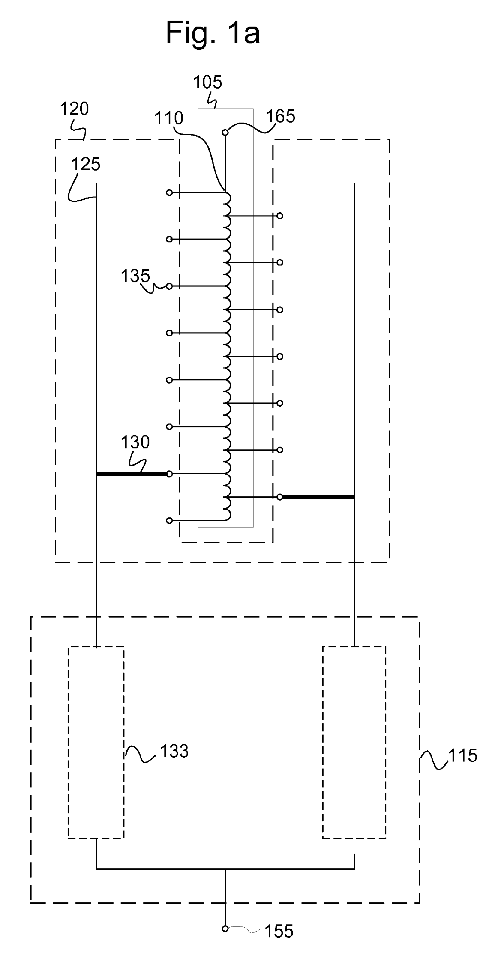

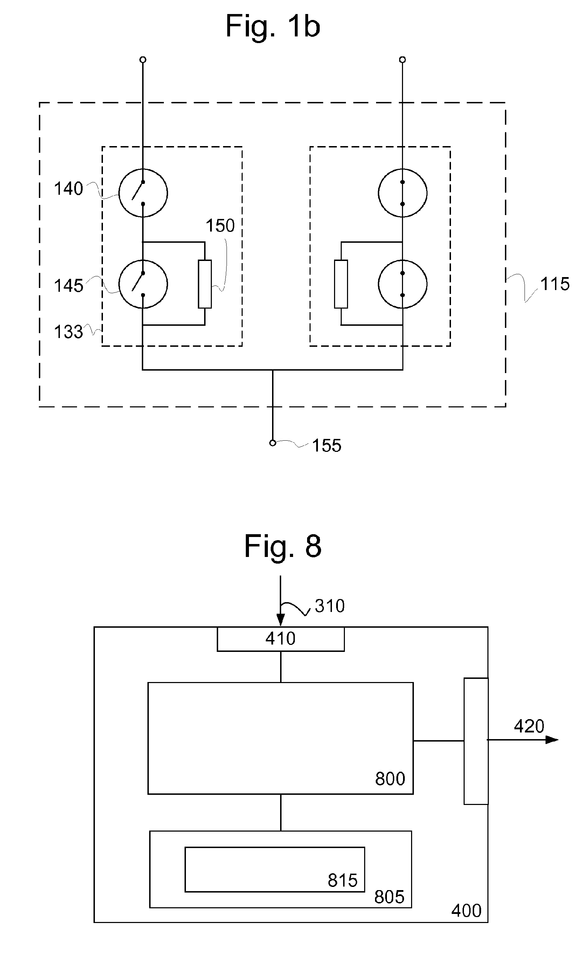

**Fig. 1** schematically illustrates an example of a tap changer 100 having a diverter switch 115 which is connected to a tap selector 120. The tap selector 120 is in turn connected to a regulating winding 105 having a set of different taps 110. The tap selector 120 of Fig. 1 comprises two current collectors 125, two moveable contacts 130 and a set of fixed contacts 135, where each fixed contact 135 is arranged to be connected to one of the taps 110 of the regulating winding 105. The two moveable contacts 130 are, at one end, in electrical contact with a respective one of the current collectors 125. The moveable contacts 130 can move along the current collectors 125 to different positions, at which positions the other ends of the moveable contacts 130 are in electrical contact with a respective one of the fixed contacts 135.

A diverter switch 115 can be designed in a number of different ways. A diverter switch 115 typically has at least two branches 133, where each branch 133 has a low impedance path and a high impedance path in order to allow for smooth switching, and where each branch 133 is connected to an external contact 155. During static operation, the current flows through the low impedance path of the connected branch 133.

According to the invention, a diverter switch 115 is used wherein each branch 133 comprises a transition resistor 150, and a series connection of a transition interrupter 140 and a main interrupter 145, where the transition resistor 150 is connected in parallel with the main interrupter 145. Each branch 133 is, at one end, connected to a respective one of the two current collectors 125, and, at the other end, connected to an external contact 155 of the tap changer 100. The main interrupter 145 is arranged to make or break the low impedance path, while the transition interrupter 140 is arranged to make or break the high impedance path of a branch 133.

A diverter switch 115 as defined above, wherein each branch 133 comprises a transition resistor 150, and a series connection of a transition interrupter 140 and a main interrupter 145, where the transition resistor 150 is connected in parallel with the main interrupter 145, will in the following be referred to as series-interrupter diverter switch 115. One series-interrupter diverter switch is disclosed in US5,594,223.

An example of a series-interrupter diverter switch 115 is shown in **Fig. 1****b.** In the diverter switch 115 of Fig.1b, the main interrupter 145 is connected to be electrically closer to the external contact 155 than the transition interrupter 140. In an alternative implementation of a series-interrupter diverter switch 115, the transition interrupter 140 is connected to be closer to the external contact 155.

By switching the transition interrupters 140 and main interrupters 145 in a manner described below, one or the other of the moveable contacts 130 will be in electrical contact with the external contact 155, and will thus provide an electrical path through the tap changer 100. Similarly, the two current collectors 125 will take turns at being part of the electrical path of the tap changer 100. The electrical path through the tap changer 100 ends at the external contact 155 at one end, and, at the other end, at the fixed contact 135 which is currently connected.

Upon switching from one tap 110 to another in a tap changer 100 having a diverter switch 115 of two branches 133, the mechanical connection of the fixed contact 135 of the tap 110 which is to be connected is made (via the moveable contact 130) at a point in time when the current collector 125, to which the connection is made, is disconnected from the current path. Hence, the mechanical connection of the selected tap 110 to the current collector 125 can be made at zero current. Once the selected tap 110 has been connected to the current collector 125, the current can be switched over, from the hitherto connected current collector 125 to this current collector 125, by means of the interrupters 140/145 of the diverter switch 115.

A series-interrupter diverter switch is, as will be discussed below, comparatively forgiving to faults in the interrupters 140, 145.

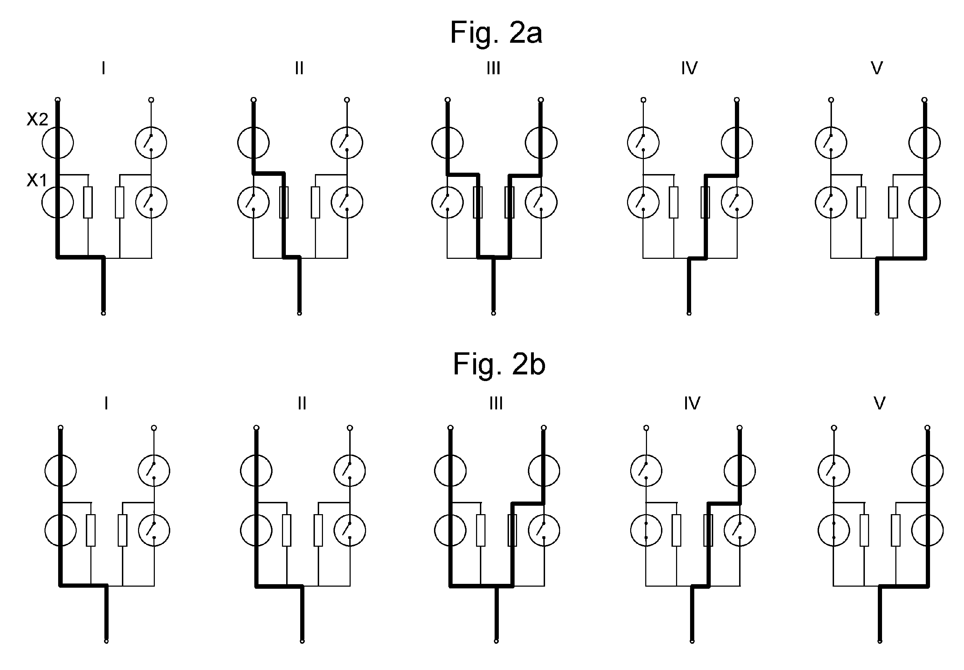

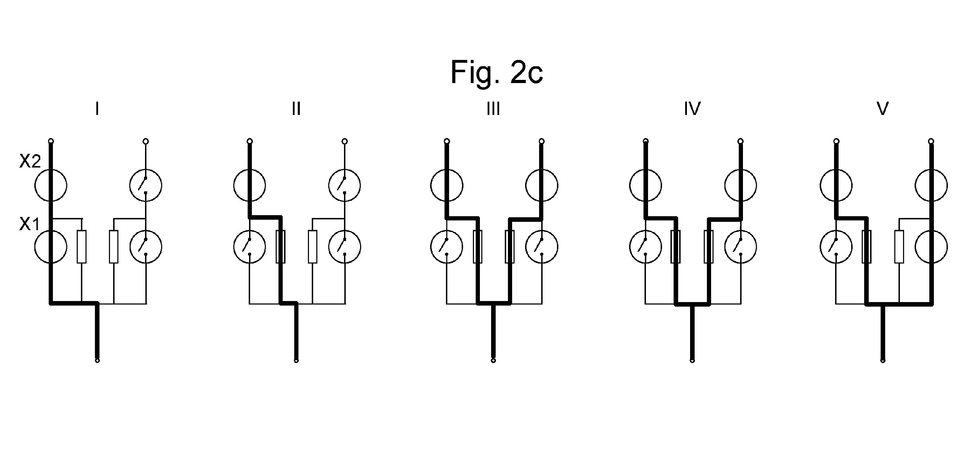

The switching operation of a series-interrupter diverter switch 115 will now be described in relation to Fig. 2a-c. Fig. 2a-c each illustrates the diverter switch 115 of Fig. 1 at five different points in time during a switching operation, referred to as times I, II, III, IV and V. Fig. 2a represents a normal switching operation, Fig. 2b represents a switching operation when a main interrupter 145 fails to open, and Fig. 2c represents a switching operation when a transition interrupter 140 fails to open. For ease of description, the main interrupter 145 and the transition interrupter 140 of a first branch 133 will in relation to Figs. 2a-c be referred to as main interrupter X1 and transition interrupter X2, respectively, while the main interrupter 145 and the transition interrupter 140 of the second branch 133 will be referred to as main interrupter V1 and transition interrupter V2, respectively.

At time I of **Fig. 2a****,** which represents normal operation, the switching operation has not yet been initiated and the current flows through the main interrupter X1 and the transition interrupter X2. At time II, the main interrupter X1 has opened, and the current now flows through the transition resistor 150 of the first branch, as well as through the transition interrupter X2. At time III, the transition interrupter V2 of the second branch has closed, the diverter switch 115 now having two closed branches 133 for the current to flow through, where the current in both branches 133 is limited by a transition resistor 150. At time IV, the transition resistor X2 has opened, so that the entire current is now flowing through the second branch 133. The current is still limited by a transition resistor. At time V, the main interrupter V1 of the second branch 133 has finally closed, the current now flowing through the main interrupter V1 and the transition interrupter V2 of the second branch 133. The switching cycle performed by the interrupters X1, X2, V1, V2 during normal operation is referred to as a symmetrical flag cycle.

In a fault scenario where a high voltage transient leads to an internal flash-over in an open transition interrupter, no short circuit will be created in a series-interrupter diverter switch 115 since the current will be limited by at least one transition resistor 150. The current will simply be interrupted at the next normal current zero crossing. In relation to the main interrupter, the transition resistor 150 significantly reduces the risk for internal flash-over. a flash-over will not occur in an open main interrupter, unless a flash-over occurs at the same time across the transition interrupter connected in series, for which the probability is low.

Now consider the situation where a main interrupter 145 fails to open. This scenario is illustrated in **Fig. 2b****,** where the main interrupter X1 of the first branch remains closed during the switching operation. This scenario differs from the normal scenario shown in Fig. 2a in that at time II, the current flows along the same path as at time I, and that the transition interrupter X2 of the first branch will have to interrupt a larger current in order to arrive at the situation at time III. However, the switching operation will be successful in that upon completion of the switching operation at time V, the current will be fully commutated to the second branch. The switching cycle performed by the interrupters X1, X2, V1, V2 in case of the main interrupter 145 failing to open is referred to as an asymmetrical pennant cycle.

In **Fig. 2c****,** the scenario where a transition interrupter 140 fails to open has been illustrated. This scenario differs from the normal scenario of Fig. 2a in that at time IV, the current has not been commutated to the second branch, since the transition interrupter X2 has failed to open. At time V, which is the final stage of the switching operation, a residual current still flows through the transition interrupter X2 and the transition resistor 150 of the first branch 133, which branch should have been open at this point in time had the operation been normal.

The fault scenario illustrated in Fig. 2c is more severe than the scenario where the main interrupter 145 fails to open, since when the transition interrupter 140 fails to open, the switching will not be completed, but an unwanted current path will arise in the form of a loop through the tap changer 100, but, thanks to the transition resistor 150 of the faulty branch 133, the current in this unwanted current path will be limited. However, although the transition resistor 150 of the faulty branch 133 prevents a short circuit situation, the situation may still be very problematic. If the power loss in the faulty transition interrupter X2 is high, e.g. in case of the presence of a standing arc, there is a risk that pressure builds up, which may lead to an explosion. Furthermore, there is a risk the transition resistor 150, which continuously carries current, will burn. Hence, this situation should be avoided.

According to the invention, the risk of damage during operation of an on-load tap changer 100 is reduced by using a series-interrupter diverter switch 115, wherein the tap changer further comprises a current detector arranged to detect a current flowing through at least one path of the diverter switch and to generate a current indication signal (310) in response to a detected current. The tap changer 100 according to the invention moreover comprises a fault detector arranged to receive a current indication signal from the at least one current detector; to determine, based on the received current indication signal, whether a fault has occurred in the diverter switch; and to generate a fault indication signal if determined that a fault has occurred.

By monitoring the current through at least one current path of the diverter switch, information can be obtained on the presence of a faulty interrupter in the diverter switch. As will be seen below, in different embodiments, the fault detector can be arranged to determine, based on at least one current indication signal, whether a transition interrupter has failed to open, or whether a main interrupter has failed to open.

In one embodiment, the at least one current detector comprises at least one current detector arranged to detect a current flowing through a transition resistor 150 and to generate a current indication signal in response to a detected current.

In one embodiment, the fault detector is connected to a tripping mechanism of a transformer circuit breaker, so that the transformer, to which the tap changer is connected, can be disconnected from the power system should a severe fault (typically a fault in a transition interrupter 140) be detected.

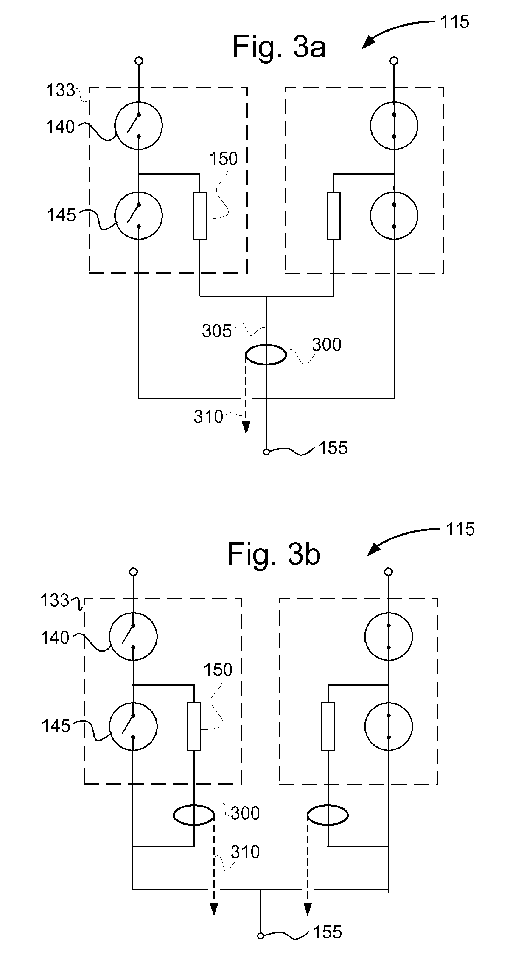

In one embodiment, the at least one path through the current of which is monitored is the path through a transition resistor 150. **Fig. 3a** shows an embodiment of a diverter switch 115 of a tap changer 100 having a current detector 300 arranged to detect a current flowing through either of the transition resistors 150. In the diverter switch 115 of Fig. 3a, the transition resistors 150 are connected to the external contact 155 via a common line 305, and a current detector 300 is arranged to detect a current flowing through the common line 305. Hence, the current detector 300 will detect a current in case there is a current flow through the transition resistor 150 of the first branch 133; as well as in case there is a current flow through the transition resistor 150 of the second branch.

**Fig. 3b** shows an alternative embodiment of a diverter switch 115 of a tap changer 100 arranged to detect a current flowing through either of the transition resistors 150. The diverter switch of Fig. 3b comprises a current detector 300 in relation to each of the branches 133, where a current detector 300 is arranged to detect a current flowing through the transition resistor 150 of a branch133. Hence, a current detector 300 will in this embodiment only detect current flowing in one of the transition resistors 150.

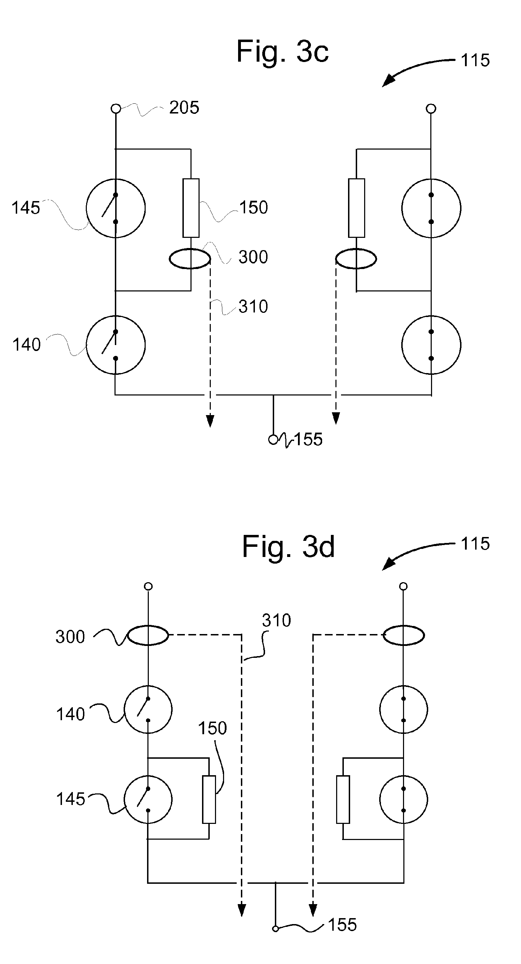

In the diverter switch of Figs. 1b, 2a-c and 3a-b, the parallel connection of the main interrupter 145 and the transition resistor 150 is connected to be electrically closer to the external contact 155 than is the transition interrupter 140. Thus, both transition resistors 150 will be connected to the external contact 155. This has the advantage that the insulation requirements on the transition resistors 150 will be comparatively low, and the physical design of the diverter switch 150 can be made in a compact fashion. However, a diverter switch embodiment can alternatively be used wherein a transition interrupter 140 is connected in series with a parallel connection of a main interrupter 145 and a transition resistor 150, and wherein the transition interrupter 140 is connected to be electrically closer to the external contact 155 than is the parallel connection of the main interrupter 145 and the transition resistor 150. This diverter switch embodiment will show a similar behavior to that shown in Fig. 1 in case of interrupter failure. Such an embodiment of a diverter switch, wherein current detectors 310 arranged to monitor the current flow in the transition resistors 150, is shown in **Fig. 3c****.**

In the embodiment shown in **Fig. 3d****,** a current detector 300 is arranged in each branch 133, where a current detector 300 is arranged to detect a current in the transition interrupter 140. The embodiment of Fig.3d will be further described below.

A current detector 300 of Fig. 3a-d is shown to send a current indication signal 310 in response to the detection of a current through the line in which the current detector is arranged. A current detector 300 could be implemented by means of one or more current sensors, where a current sensor could for example be a current transformer, a voltage divider (or other voltage measurement device), a temperature sensor sensing the temperature of the transition resistor 150, or other suitable current sensing device.

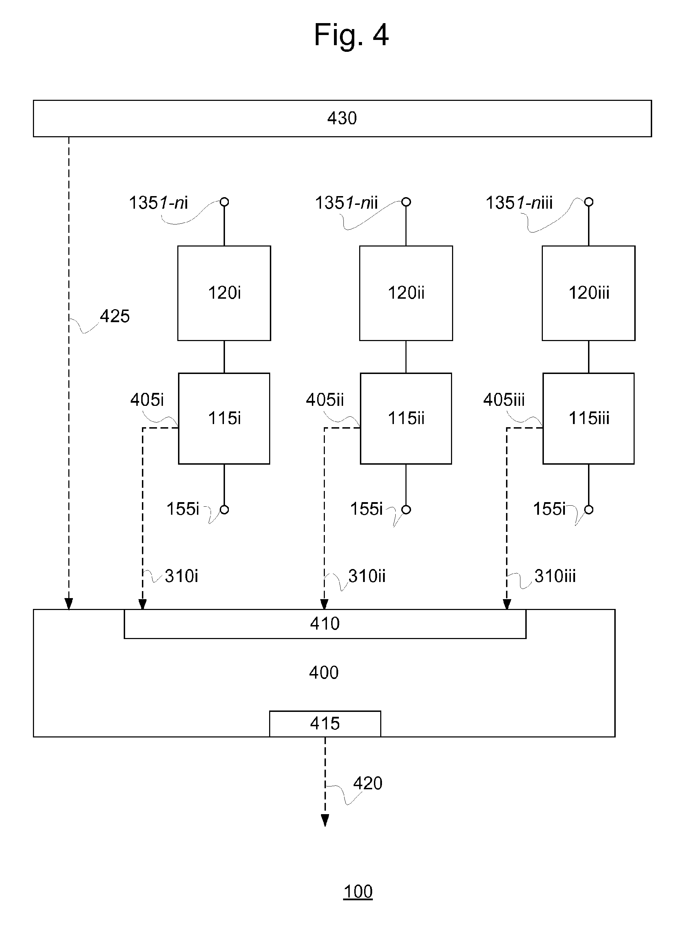

The current indication signal 310 generated by a current detector 300 can be used in order to determine whether or not the operation of the main interrupters 145 is normal or faulty, and/or if the operation of the transition interrupters 140 is normal or faulty. A tap changer 100 according to the invention includes a fault detector, which is arranged to receive current indication signals 310 from the current detector(s) 300 of the diverter switch 115 of the tap changer 100, and to determine, using at least one received current indication signal 310, whether or not the operation of the diverter switch 115 is normal or faulty. A tap changer including a fault detector 400 is schematically illustrated in **Fig. 4****.** The tap changer 100 of Fig. 4 is a three phase tap changer 100, where each phase comprises a tap selector 120 (indicated 120i, 120ii and 120iii, respectively), each providing n different fixed contact positions numbered 1351-n. Each phase further comprises a diverter switch 115 (indicated 115i, 115ii and 115iii, respectively), as well as at least one current detector 300 as described above (not shown), which is arranged to send, at an output 405, a current indication signal 310 in response to detection of a current flowing through at particular path of the diverter switch 115.

As mentioned above, the tap changer 100 of Fig. 4 further comprises a fault detector 400. The fault detector 400 is arranged to receive, at an input 410, any current indication signals 310 generated in response to a current flowing through a path which is monitored by a current detector 300 in one of the diverter switches 115i, 115ii and 115iii. Typically, the corresponding path(s) are monitored in each of the three phases. The fault detector 400 is further arranged to analyze any received current indication signals 310 in order to determine whether or not the operation of the diverter switches 115i, 115ii and 115iii is normal or faulty. The fault detector 400 is further arranged to generate a fault indication signal 420 in case the fault detector 400 has determined the presence of a fault. A fault indication signal output 415 is arranged to send such fault indication signal 420. The fault indication signal output 415 could for example be connected to a tripping mechanism of a circuit breaker (not shown), arranged to break the power line to which the tap changer 100 is connected. In this way, the tap changer 100 can be efficiently disconnected upon detection of a major fault which requires disconnection of the tap changer 100. This response to the detection of a fault is most suitable for severe faults, such as if it has been detected that a transition interrupter 140 has failed to open. As will be further discussed below, the fault detector 400 can, in one embodiment, be arranged to detect less severe faults, such as that a main switch 145 has failed to open, or that a current detector 300 is faulty. In response to such less severe faults, a fault indication signal 420 could for example be sent to a control system in order to trigger an alarm. In an embodiment wherein both severe and less severe faults can be detected, the fault indication signal output 415 could be arranged to send different types of fault indication signals; and/or a fault indication signal 420 to different receivers, depending on which fault has been detected. For example, if a major fault has been detected, a fault indication signal 420 could be sent to the tripping mechanism of a circuit breaker, while if a less severe fault is detected, a fault indication signal 420 could be sent to a control system for further action at a later point in time.

A fault detector 400 arranged to detect a fault in a one phase tap changer 100 would be arranged to receive current indication signals 310 from one diverter switch 115 only.

In an embodiment wherein a current detector 300 is arranged to detect a current flowing through a transition resistor (cf. Figs. 3a-c), an important aspect of the analysis of a current indication signal 310 is the duration of the current indication signal 310. A current detector 300 will only generate a current indication signal 310 when there is a current flowing through the transition resistor(s) 150 which the current detector 300 is arranged to monitor. This should, during normal operation of the tap changer 100, occur upon switching of the tap changer 100. If the transition interrupter 140 of the initially connected branch 133 is faulty, the duration of the current indication signal 310 will be longer than expected (cf. Fig. 2c)-in fact, if the transition interrupter 140 has not opened, the duration of the current indication signal will be continuous until the next switching operation, unless the tap changer 100 is disconnected.

In some situations, the tripping of an interrupter will cause a commutation of part of the current, but not of the entire current. This will be referred to as opening in part, and could for example occur in a vacuum interrupter wherein the vacuum, and thereby the insulating properties, have deteriorated.

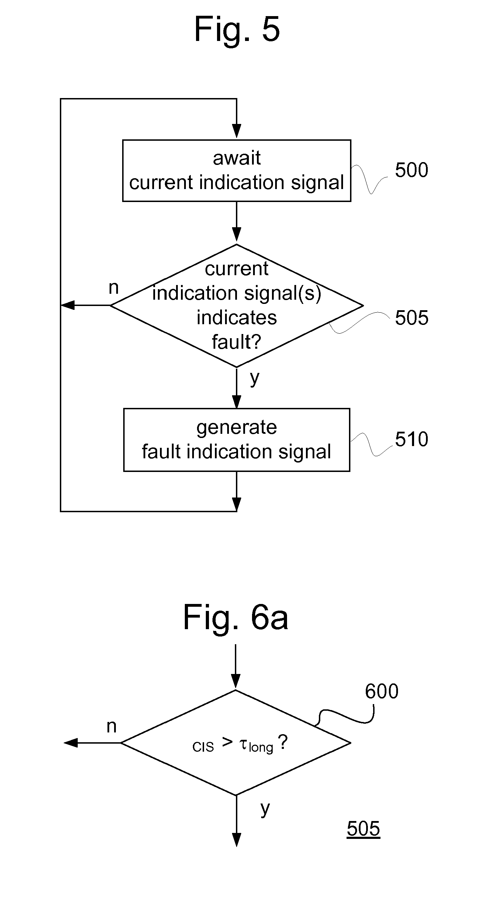

A flowchart illustrating an embodiment of a fault detection method performed by a fault detector of Fig. 4 is shown in **Fig. 5****,** applicable to all embodiments illustrated in Figs. 3a-d. At step 500, the fault detector 400 awaits a current indication signal 310. When a current indication signal 310 has been received, step 505 is entered, wherein it is checked whether the current indication signal 310 indicates a fault. In some embodiments, where two current detectors is arranged in a diverter switch 115, and/or when the tap changer 100 is a three phase tap changer 100, two or more current indication signals could be used in step 505, as will be further discussed below. If no fault has been detected in the analysis of the current indication signal(s) 310 performed in step 505, then step 500 is re-entered, wherein a current indication signal 310 is again awaited. However, if a fault has been detected in step 505, then step 510 is entered, wherein a fault indication signal 420 is generated. After a fault indication signal 420 has been generated in step 510, step 500 could be re-entered. However, in at least some situations in some embodiments, output 415 of the fault detector 400 is connected so that the fault indication signal 420 will trigger a circuit breaker so that the tap changer 100 is immediately disconnected upon generation of a fault indication signal 420, in which case the re-entry into step 500 will be superfluous.

**Fig. 6a** illustrates an embodiment of step 505 which can be applied to any of the configurations illustrated by Figs. 3a-c. In Fig. 6a, step 505 is represented by the step 600,wherein it is checked if the duration of the current indication signal 310 received in step 500, this duration here denoted τ_{CIS}, exceeds a duration threshold, here denoted τ_{long}. As seen in Fig. 3a, the duration of a current indication signal 310 should coincide with the duration of time periods II, III and IV in case the current indication signal 310 is received from a current detector 300 arranged to monitor a common line 305 to which the transition resistors 150 of both branches 133 are connected (Fig. 3a). If the current indication signal is received from a current detector 300 arranged as in Fig. 3b or 3c, the duration of a current indication signal 310 is expected to coincide with the duration of the time periods II, III (if received from the initially closed branch 133) or with the duration of the time periods III and IV (if received from the initially open branch 133). In case of the fault scenario illustrated in Fig. 2c, the duration τ_{CIS} of a signal received from a current detector monitoring a common line 305, or from a current detector monitoring the transition resistor 150 of the initially closed branch, will be considerably longer than expected. The duration of sum of the time periods II, III and IV can, in one implementation, be approximately 50 ms. Hence, in case the current detection is performed in a common line 305 (cf. Fig. 3a), the duration threshold τ_{long} could, in this implementation be set to a pre-determined value exceeding 50 ms, in order to avoid unnecessary disconnection of the tap changer 100. On the other hand, τ_{long} should be kept as short as possible in order to reduce the risk of damage caused by the current through the failing transition interrupter 140. In one implementation, the transition interrupters 140 are implemented by means of vacuum interrupters which can last an arc situation for around 0.3-1 ms (or more, depending on the current), after which time period the vacuum interrupter will be likely to explode if the arc is still present. Hence, in order to avoid severe damage to the tap changer 100 and its surroundings, a pre-determined value of the duration threshold τ_{long} should in this implementation preferably be considerably less than 0.3 s, such as for example within the range of 80-200 ms. This interval is given as an example only, and τ_{CIS} could be set to any suitable value, depending on the implementation. In fact, the time period during which the transition resistor 150 itself can carry the current, before the resistor 105 is damaged, may be decisive for the magnitude of a pre-determined value of τ_{long}, in case the transition interrupter 140 can carry a current for a longer period of time than the transition resistor 150. In case of the embodiment of Fig. 3b or Fig. 3c, wherein the current is detected in each of the transition resistor branches, a pre-determined value of τ_{long} could, if desired, be set to a smaller value than when the current is detected in a common line 305, since the expected duration of a detected current will be shorter when detected in each branch 133 than in the case where the sum of the currents is monitored in the common line 135. The value of τ_{long} could for example be set to a value within the range 1.5-3 times the expected value of τ_{CIS}, or to any other suitable value.

In the above, it has been shown that in order to detect a failing transition interrupter 140, it is sufficient to monitor the duration of a non-zero sum of the current through the transition resistors 150 (cf. Fig. 3a). In other words, in order to detect a failing transition interrupter 140, the magnitude of any current through the transition resistors 150 does not need to be known, nor is it a necessary requirement to monitor the transition resistor branches separately (as is done in the set-up of Figs. 3b, 3c and 3d). An advantage of using a current detector 300 arranged to detect the current in a common line 305, rather than in each of the transition resistors 150, is that less equipment is required in the current detection, and that the fault detector 400 can be simpler.

In some embodiments of the invention, information about a failing main interrupter 145 can also be derived from the current indication signal(s) 310.

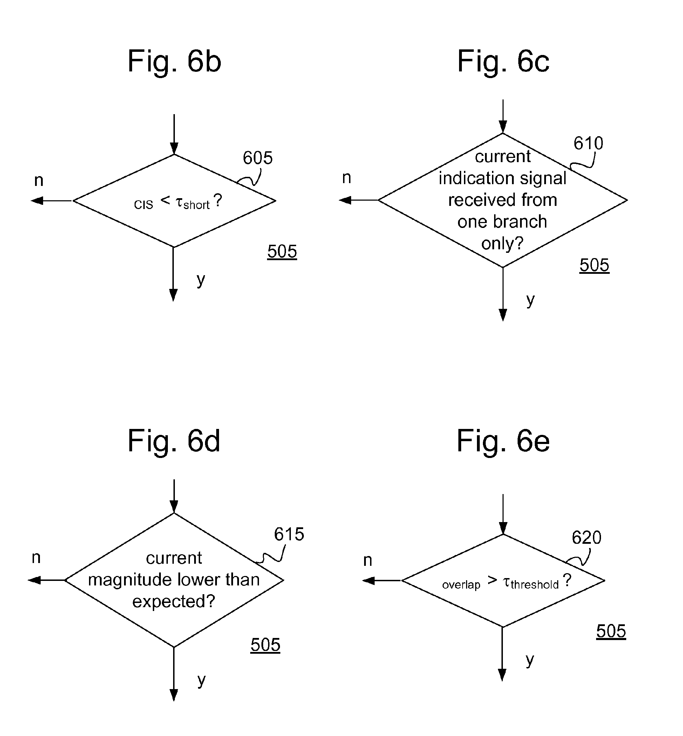

When the current in a common line is monitored (cf. Fig. 3a), a fault scenario wherein a main interrupter 145 fails to open, so that no current is commutated to the parallel connected transition resistor 150, could be detected by investigating whether the duration of a received current indication signal 310 is shorter than the expected duration, i.e. if τ_{CIS}<τₛₕₒᵣₜ, where τₛₕₒᵣₜ is set to a value which is larger than the duration of the sum of time periods II and III (or III and IV), but smaller than the sum of the time periods II, III and IV. This embodiment of step 505 of Fig. 5 is illustrated in **Fig. 6b****,** where step 505 has been implemented by means of step 605, wherein it is checked whether the duration of the current indication signal is shorter than the pre-determined threshold, τₛₕₒᵣₜ. If so, it can be concluded that a fault has occurred. In an embodiment where both the check of Fig. 6a and the check of Fig. 6b are implemented, τₛₕₒᵣₜ will be shorter than τ_{long}.

In the embodiment of Fig. 3b, the fault scenario where the main interrupter 145 of a branch 133 remains closed (cf. Fig. 2b) can alternatively be detected if a current indication signal 310 is received from the current detector 300 of a first branch 133, but not from the other. An analysis of the sequence of received current indication signals 310 could hence provide information on whether or not a main interrupter 140 is faulty. An embodiment of step 505 wherein such an analysis is performed is shown in **Fig. 6c****,** wherein step 505 has been implemented by means of step 610. In step 610, it is checked whether a current indication signal 310 has been received from a single branch 133 only. If so, it can be concluded that a fault has occurred. The check as to whether a current indication signal 310 has been received from a single branch only can be seen as a special case of a check as to whether the duration of a current indication signal 310 is shorter than an expected threshold-if a current indication signal 310 is received from one branch, a current indication signal is expected from the other - and the absence of the current indication signal 310 from this other branch 133 means that the duration of this signal is shorter than any non-zero value.

Oftentimes, when a main interrupter X2 fails to break the current, the interrupter will still perform opening-in part, and some of the current will be commutated to the transition resistor 150, but the main interrupter X2 will not be able to break the current entirely. Hence, in regards to this scenario, the illustration in Fig. 2b is somewhat simplified in that no current is shown through the transition resistor 150. In the fault scenario where the main interrupter opens in part, further information can be derived from the current indication signal(s) 310 if a current indication signal 310 carries information on the magnitude of the detected current, and not only indicates the presence of a current.

If the main interrupter 145 of a hitherto closed branch 133 opens in part during a switching operation, there will be a current through the transition resistor 150 of this branch at times II and III, as expected during normal operation. However, the magnitude of this current will be smaller than during normal operation. This fact can be used in the analysis of the current indication signals 310. This analysis is illustrated in Fig. 6d, where step 505 is implemented by means of a step 615, wherein it is checked whether the magnitude of the current differs from an expected magnitude. If so, step 510 is entered wherein a fault indication signal is generated.

An embodiment of step 615 takes advantage of the following: During normal operation, if the current detected in the transition resistors 150 are added, the magnitude of this sum should form a more or less continuous sine curve during time periods II, III and IV (slight deviations will be present, e.g. since the voltage will have changed slightly between times II and IV, since a switching operation will have been performed). However, in the fault scenario where the main interrupter 145 fails to break the current completely, the current in the transition resistor 150 of the hitherto connected branch 133 will at time II and time III be of lower magnitude than during normal operation, while at time IV, when the current has been commutated to the previously closed branch 133, the current magnitude in the transition resistor 150 of the previously closed branch 133 will take the value expected during normal operation. Hence, the curve formed by the sum of the currents detected in the two branches 133 will exhibit a magnitude jump at time IV when a fault is present. In the embodiment shown in Fig. 3a, the current detected in the common line 305 will correspond to the sum of the currents through the transition resistors 150 of the two branches, while in the embodiments of Figs. 3b and 3c, the fault detector 400 could be arranged to add the magnitudes indicated by the current indication signals 310 from the two detectors 300 in order to arrive at the magnitude of this sum. If a jump in the magnitude of the sum of currents in the two transition resistors 150 which exceeds an expected magnitude variation upon switching to a different tap by a jump threshold, a fault indication signal 420 will be generated. The actual value of this jump threshold will be set in dependence on the expected variations of the current magnitudes in the particular set-up at hand, but could for example be in the range of 5-20% of the expected current magnitude. The expected magnitude could be set to be the magnitude of the last part of this sum.

As discussed above, if the main interrupter fails completely to open, there will be no current in the transition resistor 150 of the hitherto connected branch 133. This can be seen as the scenario wherein the sum of the transition resistor currents exhibits a maximum jump. However, in order to accurately distinguish this scenario from the normal operation, this embodiment of Fig. 6d could advantageously be combined with the check of step 605.

Other embodiments of step 615 could be contemplated. For example, the magnitude in a transition resistor 150 detected during time II and III could be compared with an expected magnitude at the present operating conditions. If the magnitude is lower than the expected magnitude by a predetermined amount, a fault indication signal 410 will be generated. This pre-determined amount could take any suitable value, for example in the range of 5-20% of the expected value.

When the tap changer 100 has more than one phase, corresponding current detectors 300 would typically be implemented in each of the three phases, and the absence/presence, or magnitude, of a current indication signal 310 from the corresponding current detectors 300 of the different phases could be compared.

In a three phase system, the expected magnitude in a first phase could for example be derived from current indication signals 310 from the other two phases received in conjunction with the current indication signal 310 of the first phase. If a first phase has a lower magnitude than expected in view of the magnitudes of the other phases, it can be concluded that a fault is present. Alternatively, a value of the expected magnitude could be derived from information on the transition resistor current at previous tap changer switching operations.

By means of the embodiments of the invention described above in relation to Figs. 6a-6d, faulty operation of the interrupters140/145 in a diverter switch 115 can be detected by detecting an abnormal behavior of the current flowing through the transition resistors 150 of the diverter switch 115 (cf. Figs. 3a-3c). In another embodiment of a tap changer 100, current detectors 300 are instead arranged to detect the current flowing through the transition interrupter 140. An example of a diverter switch 115 according to this embodiment is shown in Fig. 3d. In the diverter switch 115 of Fig. 3d, a current detector 300 is provided in each branch 133, where the current detector 300 of a branch 133 is arranged to detect a current flowing through the transition interrupter 140 of the branch. Although the series connection of the transition interrupter 140 and the main interrupter 145 is arranged in Fig. 3d such that the main interrupter 145 is electrically closer to the external contact 155, this embodiment is equally applicable to a diverter switch 115 wherein the transition contact 140 is electrically closer to the external contact 155.

A current detector 310 of Fig. 3d will detect a current through the transition interrupter 140 of a branch 133. Upon a normal switching operation, there will be current flowing through the transition interrupters of both branches 133 at time III. As discussed above, this time period should be short. In the fault scenario illustrated in Fig. 2c, on the other hand, there will be a remaining current flowing through the interrupter of the hitherto closed branch 133. Hence, the fault situation of Fig. 2c can be detected by checking whether the duration of the time during which a current flows in the transition interrupter 140 of both branches exceeds an expected time duration. An advantage of this embodiment is that a current will continuously be detected in one of the current detectors 320 during static operation of the tap changer 100, so that information that the current detectors 310 operate properly will be obtained more frequently than in the embodiments discussed in relation to Figs. 3a-3c. However, the embodiment of Fig. 3d has the drawback that it is difficult to obtain any information on the functionality of the main switch 145. An embodiment of step 505 of Fig. 5 which is applicable to the embodiment wherein the current through each transition interrupter 140 is detected is shown in **Fig. 6e****.** This embodiment is illustrated by step 620, In step 620 it is checked whether the time during which the current indication signals 310 from the two branches overlap, this time being denoted τₒᵥₑᵣₗₐₚ, exceeds a duration threshold, τ_{threshold}. If so, step 510 is entered wherein a fault signal 420 is generated. The value of τ_{hreshold} could for example be pre-determined, and could then for example correspond to a value within the range of 1.5-3 times the expected duration of τₒᵥₑᵣₗₐₚ. The expected duration of corresponds to the duration of time III of Figs. 2a-2c.

When the tap changer 100 has more than one phase, corresponding current detectors 300 would typically be implemented in each of the three phases, and the absence/presence, or magnitude, of a current indication signal 310 from the corresponding current detectors 300 of the different phases could be compared.

In a three phase system, duration thresholds τ_{long} and/or τₛₕₒᵣₜ could, if desired, be derived from a comparison of the duration of a current indication signal 310 of the different phases, rather than using pre-determined values of these duration thresholds. If two current indication signals 310 from two different phases are of approximately the same duration, it is most likely that this duration corresponds to the duration of a normal switching operation. The duration thresholds τ_{long} and τₛₕₒᵣₜ could hence be set in dependence on the duration of the current indication signals 310 from these phases, with a margin of for example 50-300 % of this duration, or any other suitable margin, depending on for how long the diverter switch 115 can last a fault current. Similarly, the overlap threshold τ_{threshold} of Fig. 6e could also be derived from the overlap values of the different phases in a three phase tap changer.

Information on the magnitude through the transition resistor 150 could be useful also on the fault scenario of Fig. 2c. The magnitude information can for example give an indication as to whether or not a disconnection of the tap changer 100 from the power line is urgent.

When a sensor of a current detector 300 is implemented by means of a temperature sensor sensing the temperature of a transition resistor 150 (in the embodiments of Figs. 3a-3c), the temperature measure obtained could be converted to a current measure by use of information on the thermal properties of the transition resistor 150 in combination with historic information on the current through the transition resistor 150, so that the magnitude of the current can be obtained from the temperature measure. Such conversion could for example be performed by the fault detector 400. In addition, the measure of the temperature of the transition resistor 150 could be compared to a temperature threshold, above which there is a risk that the transition resistor 150 would burn. If the temperature exceeds such temperature threshold, a fault indication signal 420 could advantageously be generated. Such monitoring of the actual temperature can be useful for example if a sequence of switching operations are performed during a short period of time, so that the transition resistors 150 will not have time to cool down between the switching operations.

In relation to Figs. 6a-6d, different embodiments of the analysis performed in step 505 have been described in relation to the embodiments wherein a current detector is arranged to detect a current through a transition resistor. One or more of these analysis embodiments can be used in the same tap changer 100. For example, the check of Fig. 6a and the check of Fig. 6d could be combined, so that the check of Fig. 6a is first performed, and if no fault is detected, then the check of Fig. 6d will also be performed. Alternatively, the check of Fig. 6a could be combined with the check of Fig. 6b or 6c, depending on configuration of the set up; or the check of Fig. 6b or 6c could be combined with the check of Fig. 6d; or the check of Fig. 6a could be combined with both the check of Fig. 6d and one of the checks of Fig. 6b or 6c. Since the fault detected by the analysis of Fig. 6a is often more severe than the fault detected by the analyses of Figs. 6b-6d, it is often advantageous to perform the analyses of Fig. 6a prior to the analyses of Figs. 6b-6d. Further embodiments of the analysis of the current indication signals could also be made.

A combination of current detectors 310 arranged to detect a current in a transition interrupter 140 (cf. Fig. 3d) and at least one current detector 310 arranged to detect a current in the transition resistors 150 (cf. Figs. 3a-c) could be used, if desired.

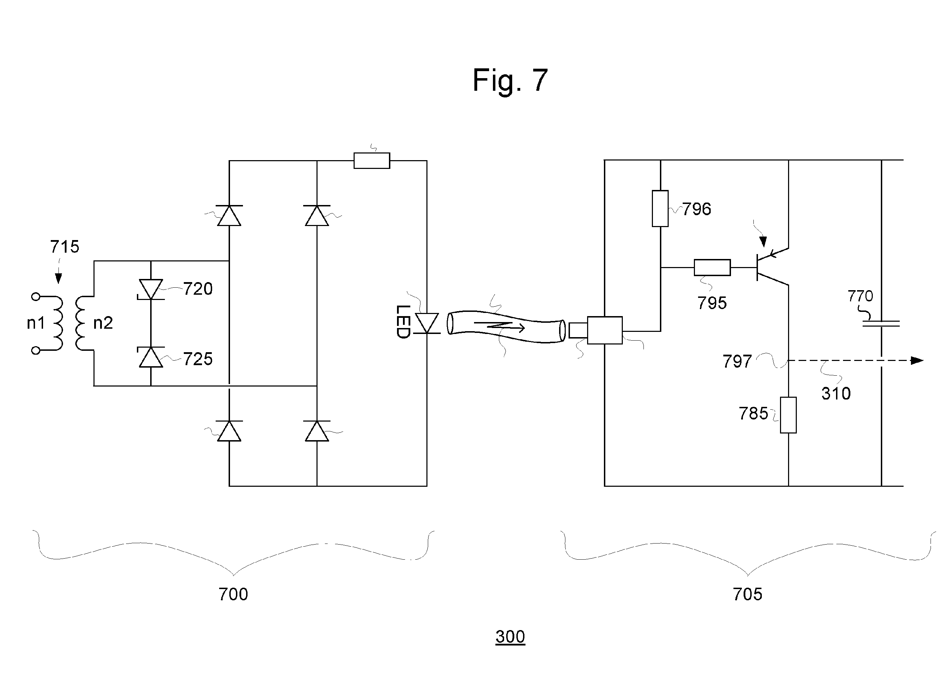

The active parts of the tap changer 100 will be at a high potential when the tap changer 100 is in use. In order to simplify operation and maintenance and/or power supply to the fault detector 400, the fault detector 400 could advantageously be arranged at or near ground potential. In order to facilitate the transmission of the current indication signals 310 to the fault detector 400 from the current detectors 300 at high potential, optical transmission can advantageously be used. An example of a current detector 300 comprising an electric-optic-electric signal converter is shown in **Fig. 7****.** The current detector 300 of Fig. 7 comprises a transmitter part 700 and a receiver part 705. The transmitter part 700 of Fig. 7 is arranged to convert an electrical signal, obtained in response to a detected current, into an optical signal 710 to be transmitted across an electrical potential; while the receiver part of Fig. 7 is arranged to convert a received optical signal 710 into an electrical current indication signal 310. The current detector 300 of Fig. 7 comprises a current sensor 715 in the form of a current transformer, where a first winding of the current transformer is arranged to pick up electrical signals when a current flows through a transition resistor 150. The turns ratio of the current transformer could for example be 1000, although any suitable turns ratio could be used. In another implementation, another type of current sensor 715 could be used as discussed above.

A series connection of two Zener diodes 720 and 725 is connected in parallel with the second winding of the current transformer 715 of Fig. 7. The Zener diodes 720, 725 are arranged to conduct in opposite directions, towards each other. The transmitter part 700 of Fig. 7 further comprises four diodes 730, 735, 740 and 745, where the diodes 730 and 735 are series connected to conduct in opposite directions away from each other, as are diodes 740 and 745. The series connection of diodes 730, 735 and the series connection of diodes 740, 745 are connected in parallel. Furthermore, one end of the parallel connection of the sensor 715 and the Zener diodes 720 & 725 is connected between the diodes 730 & 735, while the other end of this parallel connection is connected between the diodes 740 & 745. The series connections of diodes 730 & 735 and of diodes 740 & 745, respectively, are further connected in parallel with a series connection of a resistor 750 and a light source 755, here in the form of a light emitting diode (LED) 755.

Hence, when a current is sensed by the sensor 715, a voltage is generated across the LED 755, which will give off an optical signal 710.

The receiving part 705 of the current detector 300 of Fig. 7 comprises an optical receiver 760 arranged to convert an optical signal into an electric signal. The optical receiver can for example be a phototransistor. The input of optical receiver 760 is connected to the output of LED 755 by means of an optical cable 765.

The optical receiver 760 of Fig. 7 is powered by a DC voltage U, which could for example be a 5 V DC voltage source, or of any other suitable voltage. Across the poles of the voltage source is connected a capacitor 770. I parallel with capacitor 770 is connected a series connection of a pnp transistor 780 and a resistor 785 is connected, where the resistor 785 is connected at the emitter side of the transistor 780. The output 790 of the optical receiver 760 is connected to the base of the transistor 780 via a resistor 795. The output 790 of the optical receiver 760 is further connected to the high voltage end of the power source via a resistor 796.

By means of the circuitry of the receiver part 705, an optical signal 710 received by the optical receiver 760 can be converted to an electrical signal and amplified to a suitable power. An output 797 is arranged between the emitter of the transistor 775 and the resistor 780, at which output 797 a current indication signal 310 will be delivered in response to a current detected by sensor 715.

An advantage of the current detector 300 of Fig. 7 is, in addition to that it facilitates for signal transmission over a high electrical potential difference, that no separate power source is required at the transmission part end, since the current transformer receives its energy from the current through the line it is arranged to monitor. (When the current sensor is implemented by use of a different technique, a transformer could still be used as a power source, if desired). There are many ways in which a current detector 300 can be implemented, and the current detector 300 of Fig. 7 is given as an example only. As mentioned above, other current sensing techniques may be used. Furthermore, if the fault detector 400 is implemented at the same potential as the tap changer 100, no optical conversion is necessary. Moreover, when photo conversion is used, a photo diode or other device can be used instead of the phototransistor for optical-electric signal conversion; electric-optical signal conversion can be achieved by other means than by using a LED 155; amplification can be achieved by other means than by using a pnp transistor 780, for example by using an npn transistor, a power amplifier, a FET transistor, a tube amplifier, etc, or the amplification could be omitted altogether, etc. The transmitting part 705 of Fig. 7 is arranged to send an optical signal 710 regardless of the direction of the detected current - in another implementation, the transmitting part could be arranged to only send an optical signal 710 in response to currents of one direction, etc. Depending on the techniques used in the current detector 300, the circuitry of the detector 300 will be implemented accordingly.

The magnitude of a current detected by a current detector 300 could for example be conveyed to the fault detector 400 by means of pulse modulation of the current indication signal 310- for example, the range of magnitude could be divided into two or more ranges, so that if the magnitude falls within a first range, a first pulse pattern is used, etc. Other ways of conveying magnitude could be used, such as a colour coding scheme in case optical transmission by use optical sources of different colours is used, etc.

The fault detector 400 can for example be implemented using a suitable combination of hardware and software. In **Fig. 8****,** a computer implemented embodiment of the fault detector 400 is schematically illustrated. Fig. 8 shows the fault detector 400 comprising processing means 800 connected to a computer program product 805 in the form of a memory, as well as to interfaces 410 and 415, where interface 415 is arranged to receive current indication signals 310, and interface 1015 is arranged to deliver a fault indication signal 420.

The memory 805 stores computer readable code means in the form of a computer program 815, which, when executed by the processing means 800, causes the fault detector 400 to perform a fault detecting method. Different embodiments of such method are illustrated in Figs. 5 and 6a-e. In other words, the fault detector 400 would in this embodiment be implemented by means of one or more general purpose processors or one or more processors especially developed for monitoring of a power transmission system, in combination with software 815 for performing a fault detection method.

A current detector 300 will only generate a current indication signal 310 when there is a current flowing through the transition resistor(s) 150 which the current detector 300 is arranged to monitor. This should, in the embodiments illustrated in Figs. 3a-3c, only occur upon switching of the tap changer 100 if the tap changer 100 operates normally. Hence, during long periods of time, no signal 310 will be generated by the current detector 300 in these embodiments. In order to ensure that the absence of a current indication signal 310 is in fact due to the absence of a current through the transition resistor(s) 150, one or more redundant current detectors 300 could be provided, and the presence/absence of a current indication signal 310 from the different current detectors 300 arranged to monitor the same transition resistor(s) 150 could be compared in the fault detector 400. The fault detector 400 could be arranged to generate, if the fault detector 400 has discovered a discrepancy between received current indication signals 310 from the different current detectors 300 arranged to monitor the same current, a signal indicating that one of these current detectors 300 is faulty. An output arranged to send such current detector fault indication signal could for example be connected to a control system arranged to issue an alarm.

In a three phase system, wherein a current detector 300 of a phase is arranged to detect the sum of the currents in the transition resistors 150 of the different branches 133 of the phase (cf. Fig. 3a), a comparison between the different phases in terms of whether or not a current indication signal 310 has been received could be used, if desired, to detect a fault current detector 300: The current detector 300 is in this embodiment arranged to detect a current flowing in any of the branches 133, and it seems likely that the absence of a current indication signal 310 from one phase, when a current indication signal 310 has been received from the other phases, is due to a faulty operation of the current detector 300 of the phase, rather than to a faulty operation of the main interrupter 145 of both branches 133. Hence, a check as to whether or not a current indication signal 310 has been received from the other phases when received from a first phase gives information on the status of the current detectors 300 of the other phases. If no current indication signal 300 is received in one or more of the other phases in this situation, a detector fault indication signal could advantageously be generated.

The fault detector 400 could, if desired, further be arranged to receive a signal indicative of the occurrence of a switching operation, here referred to as a switching indication signal 425. The fault detector 400 of Fig. 4 is arranged to be provided by the optional feature of being connected to receive a switching indication signal 425 from a switching signal source 430, such source 430 for example being auxiliary contacts at the electric motor driving the switching operation, and/or by a control system initiating the switching operation. Such switching indication signal 425 would provide an indication that a current indication signal 310 is to be expected, and could for example be used to detect a faulty operation of a current detector 300 which is arranged to detect a current in a common line 305 (cf. Fig. 3a), as an alternative or complement to the phase comparison described above.

In the above, the duration of a current indication signal 310 has been assumed to correspond to the duration of the detected current giving rise to the current indication signal 310. However, other implementations of conveying the duration of a current can be contemplated, such as for example sending a first current indication signal when a current is first detected, and sending a second current indication signal when the detected current has ceased. For the purposes of this invention, such first and second current indication signals will be seen as the same current indication signal, and the duration of this current indication signal corresponds to the time difference between such first and second current indication signals.

The invention has been described above in relation to a tap changer 100 having two current collectors 125, and a diverter switch 115 having two branches 133. The invention is however equally applicable to a tap changer 100 having three or more diverter switch branches 133. When more than two branches 133 are present, a current detector 300 could be provided for each of the branches 133; or each of the transition resistors 150 could be connected to a common line 305 monitored by a current detector 300; or a group of the transition resistors 150 could be connected to a common line 305 monitored by a current detector 300, while other transition resistors 150 are monitored by one or more further current detectors 300.

The invention can be applied to a tap changer 100 having a diverter switch 115 comprising main and transition interrupters 140, 145 of any technology. In particular, the invention is advantageous in tap changers 100 having main and transition interrupters 140, 145 implemented by means of vacuum interrupters. In dry tap changers 100, i.e. tap changers 100 which are insulated by means of air or air-like gases, vacuum interrupters can advantageously be used, since they provide a high current-breaking capacity at low space consumption. If air-insulated mechanical interrupters were to be used, such mechanical interrupters would typically have to be considerably larger than vacuum interrupters of corresponding breaking capacity. Furthermore, although the above description has mainly been made in terms of mechanical interrupters, the invention can equally well be applied to a tap changer having main and/or transition interrupters implemented by means of solid state technology.

Although various aspects of the invention are set out in the accompanying independent claims, other aspects of the invention include the combination of any features presented in the above description and/or in the accompanying claims, and not solely the combinations explicitly set out in the accompanying claims.

One skilled in the art will appreciate that the technology presented herein is not limited to the embodiments disclosed in the accompanying drawings and the foregoing detailed description, which are presented for purposes of illustration only, but it can be implemented in a number of different ways, and it is defined by the following claims.

## Claims

1. A tap changer (100) for connection to a regulating winding (105) of a transformer connected to a power line, the tap changer comprising a diverter switch (115) having at least two branches (133), wherein each branch comprises:
a series connection of a main interrupter (145) and a transition interrupter (140); and
a transition resistor (150) connected in parallel with the main interrupter; the tap changer further comprising:
at least one current detector (300) arranged to detect a current flowing through at least one path of the diverter switch and to generate a current indication signal (310) in response to a detected current; and
a fault detector (400) arranged to
receive (500) a current indication signal from the current detector; determine (505; 600; 605; 610; 615), based on at least one received current indication signal, whether a fault has occurred in the diverter switch; and
generate (510) a fault indication signal (420) if determined that a fault has occurred in the diverter switch.

2. The tap changer of claim 1, wherein
the at least one current detector comprises at least one current detector arranged to detect a current flowing through a transition resistor and to generate a current indication signal in response to a detected current.

3. The tap changer of claim 2, wherein
the fault detector is arranged to determine whether a transition interrupter has failed to open by determining whether the duration of a received current indication signal exceeds a first threshold.

4. The tap changer of any one of the above claims, wherein
the fault detector is arranged to determine whether a main interrupter has failed to open by determining whether the duration of a current indication signal is shorter than a second threshold.

5. The tap changer of any one of the above claims, wherein
a current detector is a current measurement device capable of indicating, by means of the current indication signal, a magnitude of a detected current, and wherein
the fault detector is arranged to consider the magnitude of the detected current in the determining of whether a fault has occurred.

6. The tap changer of any one of the above claims, further comprising at least two current collectors (125), wherein
the diverter switch is arranged such that each branch is connected between an external contact (155) and a respective current collector (125) of the tap changer;
the main interrupter is connected to be electrically closer to the external contact than is the transition interrupter;
the transition resistors are connected to the external contact via a common line (305); and
the at least one current detector is arranged to detect a current flowing through the common line.

7. The tap changer of any one of claims 1-5, wherein
the diverter switch comprises a current detector per branch, where a current detector of a branch is arranged to detect a current flowing through the transition resistor of said branch.

8. The tap changer of any one of the above claims, wherein
the diverter switch comprises a current detector per branch which is arranged to detect a current flowing through the transition interrupter of said branch; and
the fault detector is arranged to determine whether a transition interrupter has failed to open by checking whether a time period, during which a current indication signal is received from the current detector of two branches, exceeds a third threshold.

9. The tap changer of claim 3, 4 or 8, wherein
the tap changer is a three phase tap changer, where each phase comprises a diverter switch; and
the fault detector is arranged to determine, from an analysis of the duration of corresponding current indication signals from the three phases, a value of the first and/or second and/or third threshold.

10. Method of operating a tap changer (100) comprising a diverter switch (115) having at least two branches (133), wherein each branch comprises:
a series connection of a main interrupter (145) and a transition interrupter (140); and
a transition resistor (150) connected in parallel with the main interrupter; the method comprising:
monitoring at least one path of the diverter switch to detect a current flowing through the path;
generating a current indication signal (310) in response to a current flowing through the path;
determining (505; 600; 605; 610; 615), based on at least one generated current indication signal, whether a fault has occurred in the diverter switch; and
generating (510) a fault indication signal (420) if determined that a fault has occurred in the diverter switch.

11. The method of claim 10, wherein
monitoring at least one path comprises monitoring whether a current flows through a transition resistor.

12. The method of claim 11, wherein
the determining comprises whether the duration of a received current indication signal exceeds a first threshold.

13. The method of claim 11 or 12, wherein
the determining comprises determining whether the duration of a received current indication signal is shorter than a second threshold.

14. The method of any one claims 10-13, further comprising
determining the magnitude of a detected current; and wherein
the determining of whether a fault has occurred is made in dependence on the determined magnitude of the detected current.

15. The method of any one of claims 10-14, wherein
monitoring at least one path comprises monitoring, in relation to each branch, whether a current flows through the transition interrupter of the branch; and
determining whether a fault has occurred comprises checking whether a time period, during which a current indication signal is received from the current detector of two branches, exceeds a third threshold.
